# EUROPÄISCHE PATENTSCHRIFT

(11) **EP 1 173 727 B1**
(45) Veröffentlichungstag und Bekanntmachung des Hinweises auf die Patenterteilung: **29.06.2005**
(21) Anmeldenummer: 00941877.3
(22) Anmeldetag: 19.04.2000
(51) Int. Cl.: G01D 5/14, G01D 5/16, G01B 7/30

(54) **MESSVORRICHTUNG ZUR BERÜHRUNGSLOSEN ERFASSUNG EINES DREHWINKELS**
MEASUREMENT DEVICE FOR THE NON-CONTACT DETECTION OF AN ANGLE OF ROTATION
DISPOSITIF DE MESURE POUR LA DETECTION SANS CONTACT D'UN ANGLE DE ROTATION

(30) Priorität: 21.04.1999 DE 19917939; 24.02.2000 DE 10008535
(43) Veröffentlichungstag der Anmeldung: 23.01.2002
(73) Patentinhaber: ROBERT BOSCH GMBH, 70442 Stuttgart (DE)
(72) Erfinder: BRAUN, Alexander, D-75173 Pforzheim (DE); REICHL, Asta, D-70499 Stuttgart (DE); KLOTZBUECHER, Thomas, D-70635 Rudersberg (DE)
(86) Internationale Anmeldenummer: PCT/DE2000/001223
(87) Internationale Veröffentlichungsnummer: WO 2000/063650

(56) Entgegenhaltungen:
- DE-A- 4 233 549
- DE-A- 19 741 579
- PATENT ABSTRACTS OF JAPAN vol. 017, no. 023 (P-1470), 18. Januar 1993 (1993-01-18) & JP 04 248403 A (ASAHI CHEM IND CO LTD), 3. September 1992 (1992-09-03)

## Beschreibung

### Stand der Technik

Die Erfindung geht aus von einer Meßvorrichtung zur berührungslosen Erfassung eines Drehwinkels nach der Gattung des Anspruchs 1. Bisher werden, wie zum Beispiel in der DE 197 53 775.8 A1 beschrieben, bei diesen Meßvorrichtungen Flußleitteile aus magnetisch leitendem Material zur Lenkung der Magnetlinien verwendet. Diese Meßvorrichtungen bauen aber somit relativ groß und sind nur bedingt in Meßsysteme einzubauen. Ferner kann bei dieser Ausbildung die Steigung des linearen Bereichs der Meßkurve nicht hinreichend genug beeinflußt werden.

JP-A-04248403 offenbart eine Meßvorrichtung bei welcher der Drehwinkel eines im Bogen bewegenden Teils festgestellt werden kann. Ein Magnet ist auf dem beweglichen Teil montiert. Ein Hall-Element befindet sich im Magnetfeld des Magneten und erzeugt einen Meßsignal in Abhängigkeit des Einfallwinkels des Magnetflusses. Der Magnet wurde derart angeordnet, daß die Polarisierung des Magneten tangential zum Bewegungsbogen ist.

Bei dem Sensor nach der DE 197 12 833 A1 ist ein Permanentmagnet auf einem Polrad angeordnet, das sich an einem magnetoresistiven Sensor vorbeibewegt. Hier ergeben sich nur kurze Piks in der Meßkurve, die als Trigger- oder Zählimpulse verwendet werden.

In der DE 196 29 611 A1 ist eine Meßvorrichtung beschrieben, die mehrere feststehende Hall-Elemente aufweist. An diesen Hall-Elementen wird ein Rotor aus weichmagnetischem Material so vorbeibewegt, daß sich der Abstand zwischen dem jeweiligen Hall-Element und dem Rotor kontinuierlich ändert. An jedem Hall-Element ist starr ein Permanentmagnet befestigt, der den Magnetfluß erzeugt. Für die Meßwerterfassung ist somit der Rotor als Flußleitstück zusätzlich erforderlich.

Bei dem Drehwinkelaufnehmer nach der DE 40 14 885 A1 weist der Permanentmagnet Flußleitstücke auf, so daß zwischen den Polen des Magneten ein möglichst mit parallelen magnetischen Flußlinien und gleichförmiger Flußdichte verlaufendes Magnetfeld ausgebildet wird.

Bei dem in der DE 196 35 159 A1 beschriebenen Drehwinkelsensor werden Magnete an einen oder mehreren Reedkontakten vorbeibewegt, wobei der Drehwinkel nur in Stufen gemessen werden kann.

### Vorteile der Erfindung

Die erfindungsgemäße Meßvorrichtung zur berührungslosen Erfassung eines Drehwinkels mit den kennzeichnenden Merkmalen des Anspruchs 1 hat demgegenüber den Vorteil, daß durch nahezu beliebige Positionierung des das Ausgangssignal erzeugende magnetfeldempfindlichen Elements eine Steigung des linearen Bereichs der Meßkurve beeinflußbar ist. Der dabei erzeugte lineare Bereich kann größer als 80 Grad sein. Es kann ein relativ kleiner Magnet verwendet werden, der in einfacher Weise auf der Trägerplatte des Rotors aufgeklipst, geklebt oder auch in einem Kunststoff eingespritzt sein kann. Durch den Entfall der sonst bei berührungslosen Sensoren üblichen Flußstücke kann der Montageaufwand stark reduziert werden. Durch den Aufbau des Sensors selbst sind große geometrische Toleranzen beim Magneten zulässig. Da der Magnet im Bereich des Zentrums des Hall-Elements ein homogenes Magnetfeld aufweist, ist er gegen Axialversatz und deren Toleranzschwankungen unempfindlich. Die Kennlinie selbst setzt sich aus einem steilen und einem flachen Bereich zusammen, so daß dem flachen Bereich große Winkel und dem steilen Bereich kleine Winkel zugeordnet werden können.

Durch die in den Unteransprüchen aufgeführten Maßnahmen sind vorteilhafte Weiterbildungen und Verbesserungen der im Anspruch 1 angegebenen Meßvorrichtung möglich.

### Zeichnung

Die Ausführungsbeispiele der Erfindung sind in der Zeichnung dargestellt und in der nachfolgenden Beschreibung näher erläutert. Die Figur 1 zeigt einen Schnitt durch eine schematische Darstellung des Sensors, die Figur 2 einen Verlauf des Ausgangssignals in Volt über einem Drehwinkel von 360 Grad, wobei im Abstand von 90 Grad jeweils darunter die Stellung des Permanentmagneten gegenüber einem außermittig angeordneten Hall-Element dargestellt ist. Zur Verdeutlichung ist in den Figuren 3 und 4 die Stellung des maximalen Ausschlags der Kennlinie und des neuralen Ausschlags der Kennlinie dargestellt. Die Figuren 5, 6 und 7 zeigen verschiedene Stellungen des magnetfeldempfindlichen Elements gegenüber dem Permanentmagneten und den jeweils dazugehörigen Verlauf des Ausgangssignals über den Drehwinkel von 360 Grad. In der Figur 8 ist noch eine Abwandlung des Ausführungsbeispiels dargestellt, wobei der Magnet keine Kreisbewegung um das Zentrum des Aufbaus macht, sondern sich auf einer ovalen Umlaufbahn befindet und das Hall-Element zentrisch in der Drehachse ist.

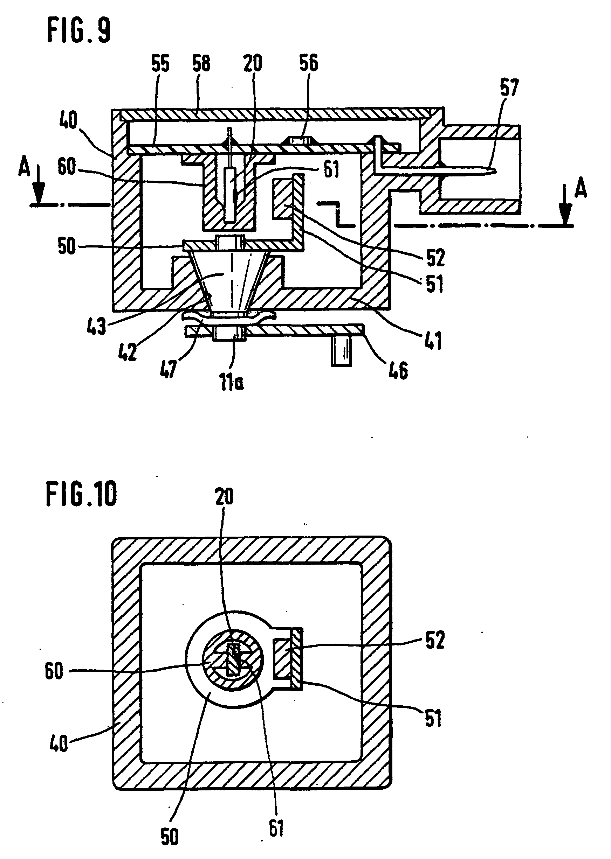

Die Figur 9 zeigt den Einbau eines Sensors mittels eines Kegellagers in das Gehäuse eines Drosselklappenstellers im Längsschnitt. Figur 10 ist ein Schnitt in Richtung A-A nach der Figur 9.

### Beschreibung der Ausführungsbeispiele

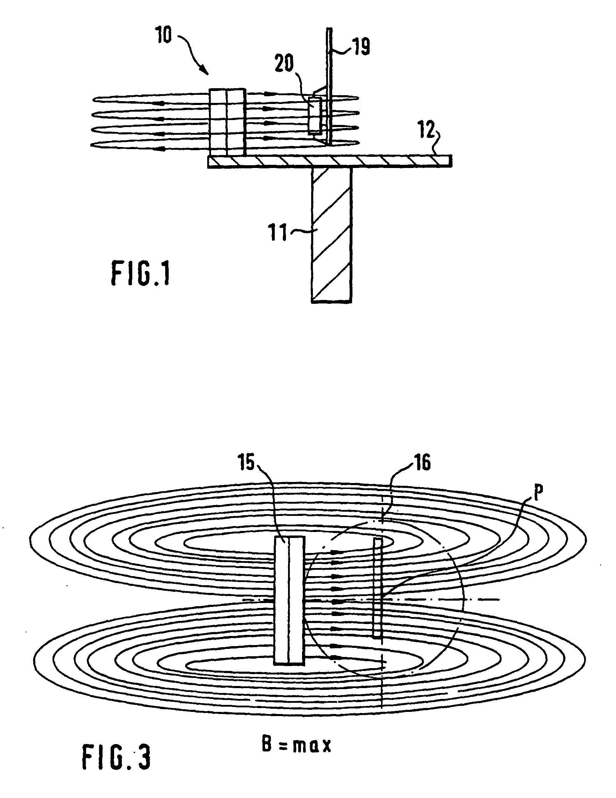

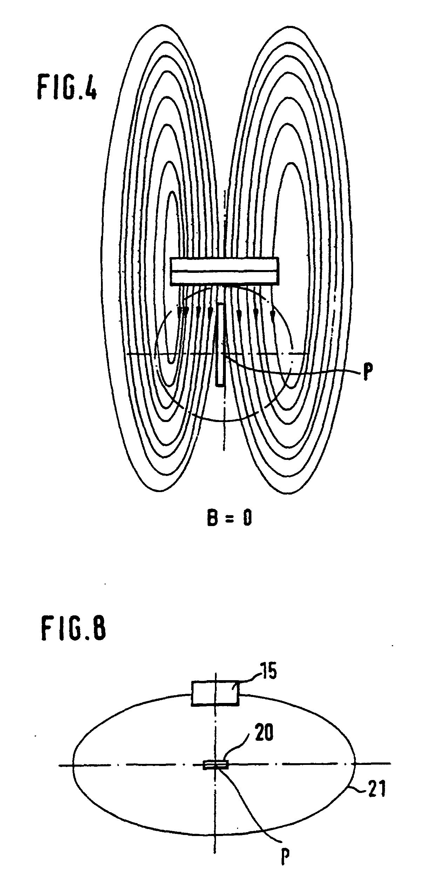

In den Figuren ist mit 10 ein Sensor bezeichnet, der mit Hilfe einer Achse 11 mit einem nicht dargestellten Bauteil verbunden ist, dessen Drehbewegung bestimmt werden soll. An der Stirnseite der Achse 11 ist mittig eine Trägerplatte 12 aufgesetzt, die gleichzeitig als Rotor dient. Zumindest die Trägerplatte 12 und insbesondere auch die Achse 11 bestehen aus magnetisch nicht leitendem Material. Die Trägerplatte 12 ist als kreisförmig ausgebildete Scheibe ausgebildet. Mit Abstand vom Mittelpunkt der Trägerplatte 12 ist zum Beispiel am Rande der Trägerplatte 12, wie es in den Figuren 1 und 3 dargestellt ist, ein Permanentmagnet 15 befestigt. Der Permanentmagnet 15 ist planar ausgebildet, d.h. er weist keine Kurvenform auf, die sich der Kreisform der Trägerplatte 12 anpassen würde. Der Permanentmagnet 15 ist parallel zu einer durch den Mittelpunkt P der Trägerplatte 12 verlaufenden Ebene 16 angeordnet. Ferner ist die Polarisierung des Permanentmagneten 15 diametral zur Achse 11 hin gerichtet. Mit anderen Worten bedeutet dies, daß die Polarisierung senkrecht zur Ebene 16 verläuft. Statt auf einer kreisförmigen Trägerscheibe könnte der Permanentmagnet 15 auch auf einem auf der Achse 11 aufsitzenden Arm oder in einem Topf befestigt sein, der somit eine Kreisbewegung ausführen würde. Ferner ist stationär mit Hilfe einer Aufhängung 19 ein magnetfeldempfindliches Element 20 über dem Mittelpunkt P der Trägerplatte 12, d.h. in der Ebene 16 angeordnet. In der Figur 1 bzw. wie deutlich aus der Figur 3 ersichtlich ist, ist das magnetfeldempfindliche Element 20 nicht zentrisch über dem Mittelpunkt angeordnet, sondern in der Ebene 16 liegend aus dem Mittelpunkt P heraus verschoben. Als magnetfeldempfindliches Element 20 können zum Beispiel eine Feldplatte, Magnettransistoren, magnetoresistive Elemente oder ein Hall-Element verwendet werden. Wichtig hierbei ist, daß das magnetfeldempfindliche Bauteil eine möglichst lineare Abhängigkeit seines Ausgangssignals von der magnetischen Induktion B und eine Abhängigkeit des Einfallswinkels des Magnetflusses aufweist.

Vorteilhaft wäre die Verwendung eines Hall-Elements mit mehreren Meßflächen, in der Ebene 16 angeordnet, zur Bildung eines Mittelwertes zu verwenden. Dadurch wird der Sensor auf x und y Versätze unempfindlicher, d.h. toleranzunempfindlicher.

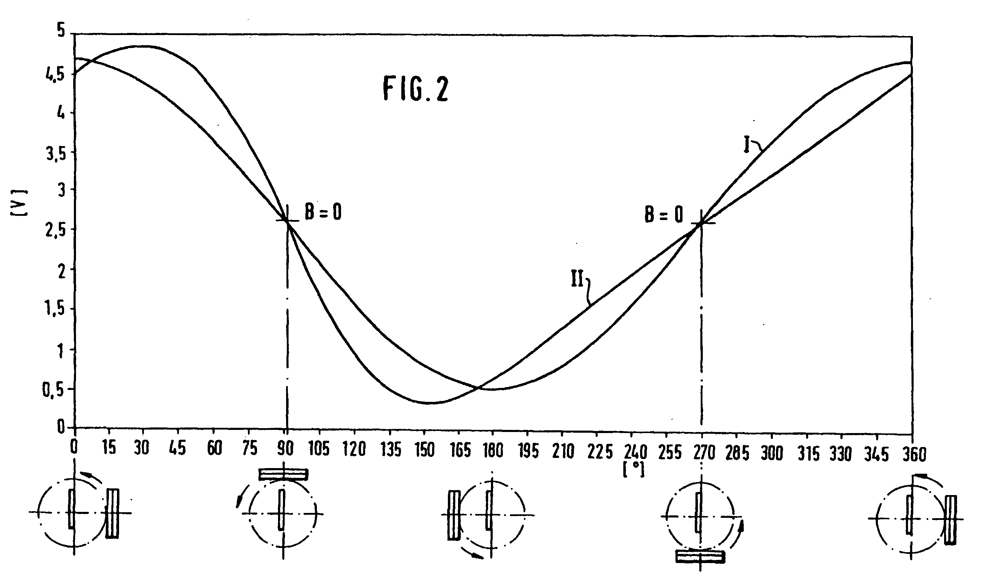

In der Figur 2 ist nun der Verlauf des Ausgangssignals über eine Winkeldrehung von 360 Grad dargestellt. Die eingezeichnete Kurve II entspricht dem Verlauf des Ausgangssignals bei einer unsymmetrischen Anordnung des magnetfeldempfindlichen Elements 20 entsprechend der Figur 1 bzw. 3. In der Figur 2 ist unterhalb des Diagramms die jeweilige Zuordnung des magnetfeldempfindlichen Elements 20 und des Permanentmagneten 15 bei den Winkelstellungen im Abstand von 90 Grad dargestellt. Bekanntlich beruht das Ausgangssignal auf der Änderung der magnetischen Induktion B während der Drehbewegung. In der Figur 3 ist nun der Verlauf der Feldlinien des Permanentmagneten 15 dargestellt, wenn die magnetische Induktion B = max im magnetfeldempfindlichen Element 20 erfolgt. Aus der Figur 3 ist ersichtlich, daß hierbei nahezu alle magnetischen Feldlinien des Permanentmagneten 15 nahezu senkrecht das magnetfeldempfindliche Element 20 durchdringen. Im Unterschied dazu ist in der Figur 4 die Zuordnung des magnetfeldempfindlichen Elements 20 zum Permanentmagneten 15 dargestellt, wenn die magnetische Induktion B = 0 entspricht. Der Figur 4 ist nun zu entnehmen, daß nahezu alle Feldlinien des Permanentmagneten 15 parallel zum magnetfeldempfindlichen Element 20 verlaufen und keine Komponente senkrecht zum magnetfeldempfindlichen Element 20 aufweisen. Während bei den bisherigen Meßverfahren mit Magnetflußteilen die Änderung der Magnetfeldstärke im Hall-Element ausgewertet wurde, wird hier der Einfallswinkel der Magnetfeldlinien auf die Meßfläche ausgewertet. Bei einer unsymmetrischen Anordnung des Hall-Elements, wie in der Figur 2 unten dargestellt bzw. aus den Figuren 1, 3 und 4 ersichtlich, beschreibt der Permanentmagnet 15 bei seiner Bewegung um das Hall-Element 20 um dessen Mittelpunkt, d.h. um dessen magnetfeldempfindlichen Bereich, eine elliptische oder ovale Bahn. Dadurch ergibt sich nur in der Stellung wie in Figur 3 dargestellt ein senkrechter Einfall der Magnetfeldlinien. In den anderen Stellungen fallen die Magnetfeldlinien unter einem bestimmten Winkel im magnetfeldempfindlichen Bereich des Hall-Elements 20 ein. Bekanntlich ist hier der nach einer Komponentenzerlegung jeweils senkrecht verlaufende Anteil auf das Hall-Element wirksam. Die elliptische oder ovale Bewegung des Permanentmagneten 15 um das Hall-Element 20 bewirkt nun, daß nicht nur der Einfallswinkel der Magnetflußlinien, sondern aufgrund der oben erwähnten Komponentenzerlegung, zusätzlich eine Veränderung der Feldstärke aufgrund der Abstandsänderungen bewirkt wird. Je nach Drehung verändert sich der Eintrittswinkel und somit der senkrecht verlaufende Anteil der Magnetflußlinien. Ordnet man nun das Hall-Element 20, wie in den Figuren 1 bis 4 dargestellt, unsymmetrisch an, so ergibt sich die in der Figur 2 dargestellte Kurve II mit einem flach ansteigenden Bereich und einem relativ steil ansteigenden Bereich. Der flach ansteigende Bereich ergibt sich dann, wenn das Hall-Element 20 sich vom Permanentmagneten weg entfernt, d.h. wenn der Abstand aufgrund der elliptischen oder ovalen Bewegung vergrößert wird. Aufgrund der unsymmetrischen Anordnung kann hierbei ein linearer Verlauf in der Meßkurve II erreicht werden, der größer 90 Grad verläuft. Im Unterschied dazu erhält man den steil verlaufenden Bereich der Kurve II, wenn das Hall-Element 20 zum Permanentmagneten 15 hinbewegt wird, d.h. wenn der Abstand zwischen dem Hall-Element 20 und dem Permanentmagneten 15 aufgrund der elliptischen oder ovalen Bewegung verringert wird.

In allen Ausführungsbeispielen, auch den nachfolgenden, ist der Permanentmagnet 15 planar ausgebildet. Er kann hierbei rechteckige oder quadratische Form aufweisen. Auch können seine Enden gerundet sein. Denkbar wäre aber auch zum Beispiel eine runde oder eine ovale Form.

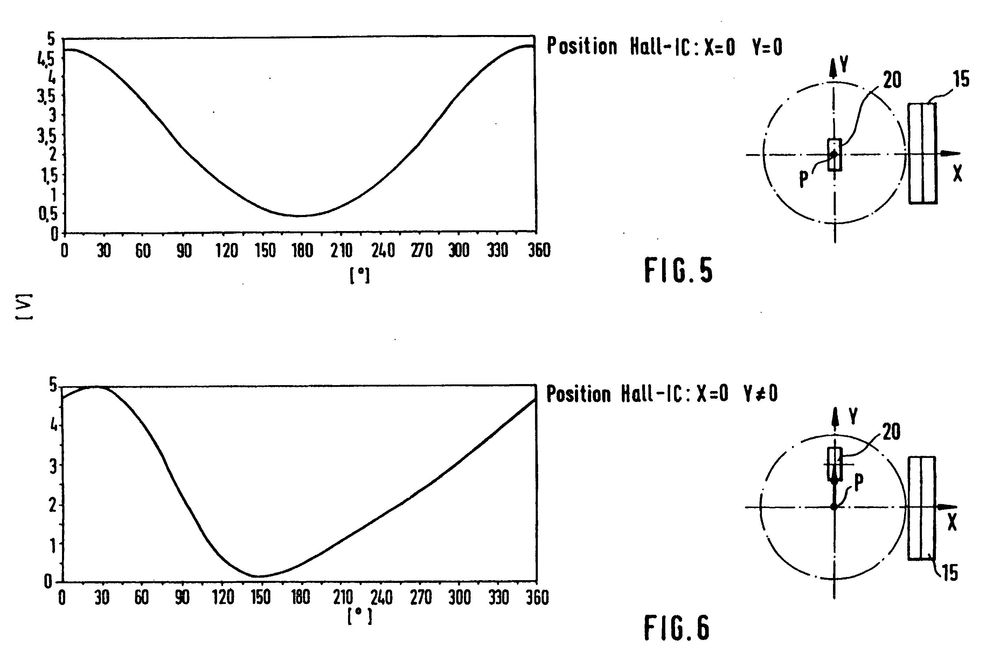

In der Figur 5 ist nun eine Abwandlung dargestellt, bei der das Hall-Element 20 im Mittelpunkt P, d.h. im Zentrum der Achse angeordnet ist. Würde man auf die Trägerplatte 12 ein Koordinatensystem mit den Achsen X und Y einzeichnen, wobei sich der Schnittpunkt, d.h. der Nullpunkt, im Zentrum der Achse 11 bzw. der Trägerplatte 12 befinden würde, so würde das Hall-Element 20 die Koordinaten X = 0 und Y = 0 haben. In der Figur 5 ist daneben die Meßkurve des Ausgangssignals des Hall-Elements 20 über dem Drehwinkel von 360 Grad dargestellt. Der Verlauf dieser Kurve entspricht einer Sinusfunktion. Die Kurve in der Figur 5 hat keinen flachen oder steilen Bereich, mit der sie von der Sinusfunktion abweichen würde, da bei der Drehbewegung des Permanentmagneten 15 um das Hall-Element 20 eine Kreisbewegung vorliegt. Zum Vergleich ist diese Meßkurve noch in der Figur 2 eingezeichnet und mit I bezeichnet.

Im Unterschied dazu ist in der Figur 6 das Hall-Element 20 in Y-Richtung aus dem Nullpunkt, d.h. aus dem Mittelpunkt P verschoben, während es sich nach wie vor in X-Richtung im Nullpunkt befindet und somit die Koordinaten X = 0 und Y ≠ 0 aufweist. Diese Position des Hall-Elements entspricht weitgehend der in den Figuren 1 bis 4 dargestellten und oben beschriebenen Art. Das in der Figur 6 dargestellte Diagramm weist aufgrund des nun zwischen dem Hall-Element 20 und dem Permanentmagneten 15 erfolgenden elliptischen Verlaufs der Drehbewegung auch die in der Figur 2 vorhandenen flachen und steilen Bereiche der Meßkurve auf.

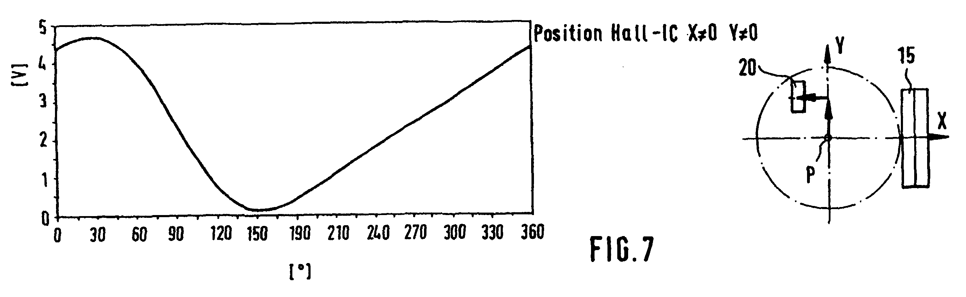

Bei der Ausbildung nach der Figur 7 ist nun das Hall-Element 20 sowohl auf der X-Achse als auch auf der Y-Achse verschoben, d.h. es weist die Koordinaten X ≠ 0 und Y ≠ 0 auf und ist somit zum Beispiel im 4. Quadranten angeordnet. Der daneben eingezeichnete Verlauf der Meßkurve weist wieder einen steilen und einen flachen Bereich auf. Aufgrund der Verschiebung des Hall-Elements gegenüber dem Permanentmagneten 15 kann nun die Meßkurve beeinflußt werden. Eine flache Steigung in einem Bereich der Meßkurve ist zur Messung von großen Winkeln notwendig, während hingegen ein steiler Bereich zur Bestimmung von kleinen Winkeln bevorzugt wird. Dadurch ist es möglich, in besonders einfacher Weise den Sensor der jeweiligen Messung anzupassen.

Bei den bisherigen Ausführungsbeispielen hat der Permanentmagnet 15 mit Hilfe eines Trägers eine kreisförmige Bewegung um die Achse 11 beschrieben und aufgrund der unsymmetrischen Anordnung des Hall-Elements 20 bzw. Befestigung gegenüber der Achse 11 bzw. dem Permanentmagneten 15 gegenüber erfolgte ein elliptischer oder ovaler Verlauf der Bewegung. Im Ausführungsbeispiel nach der Figur 8 wird nun der Permanentmagnet 15 auf einer elliptischen oder ovalen Bahn 21 bewegt und das Hall-Element 20 sitzt zentrisch auf der Achse 11, d.h. im Mittelpunkt P der Achse 11. Wichtig ist aber auch hier, daß der Permanentmagnet 15 planar angeordnet ist, und somit keine der Trägerplatte angepaßte Kurvenform aufweist.

Wichtig ist bei allen Ausführungsbeispielen, daß sich zumindest während der Drehbewegung das magnetfeldempfindliche Element 20 sich im Magnetfeld des Magneten und innerhalb der Umlaufbahn des Magneten befindet.

Da der Sensor 10 sehr klein baut und einen geringen Montageaufwand aufweist, kann er besonders einfach in Systeme wie zum Beispiel einem Tankstandmodul, eine Drosselvorrichtung, einen Fahrpedalmodul, eine Getriebesteuerung u.s.w. integriert sein. Selbstverständlich ist er auch als eigenständiger Sensor zur Bestimmung von Drehwinkeln einsetzbar. Bei seiner Verwendung ist es besonders vorteilhaft, daß der Permanentmagnet in die Drehachse oder in einen Fortsatz der Drehachse eingegossen werden kann und das Hall-Element an einem Gehäuseteil befestigt werden kann.

Beim Ausführungsbeispiel nach der Figur 9 ist mit 40 ein in etwa topfförmiges Gehäuse zum Beispiel eines Drosselklappenstellers bezeichnet. Im Boden 41 des Gehäuses 40 ist eine Bohrung 42 ausgebildet, die in Verbindung mit dem Fortsatz 43 am Boden 41 des Gehäuses 40 eine konische Ausbildung aufweist. In diese Bohrung 42 ist von der Öffnung des Gehäuses 40 her eine Welle 11a oder der Fortsatz einer Welle eingesteckt. Die Welle 11a ist korrespondierend zur konischen Form der Bohrung 42 ausgebildet, so daß die Welle 11a zumindest im sich in der Bohrung 42 befindenden Fortsatz 43 kegelförmig ausgebildet ist. Unterhalb des Bodens 41 des Gehäuses 40 ragt die Welle 11a in einen Mitnehmer 46, durch den die Drehbewegung von einem zu überwachenden Bauteil auf die Welle 11a übertragen wird. Zwischen dem Mitnehmer 46 und der Außenseite des Bodens 41 ist eine Feder 47 angeordnet, die die Welle 11a mit dem kegelförmigen Fortsatz 43 in den konischen Bereich der Bohrung 42 hineindrückt. Die Feder 47 kann aus Kostengründen auch Bestandteil des als Hebel oder Zahnrad ausgebildeten Mitnehmers 46 sein. Besteht der Mitnehmer aus Kunststoff, so können die Federn angespritzt sein, bestehen sie aus Metall, so werden die Federarme entsprechend gebogen. Auf dem gegenüberliegenden Ende der Welle 11a ist drehfest ein als Rotor dienender Magnethalter 50 befestigt. Der Magnethalter 50 weist, wie auch in der Figur 10 erkennbar ist, einen in axialer Richtung der Welle 11a ausgebildeten Fortsatz 51 auf, an dem ein Permanentmagnet 52 befestigt ist. Der Permanentmagnet 52 ist, wie bei den übrigen Ausführungsbeispielen, radial polarisiert. Der Magnethalter 50 und eventuell auch die Welle 11a bestehen aus magnetisch nicht leitendem Material. In die Öffnung des Gehäuses 40 ist eine Leiterplatte 55 eingesetzt, die die üblichen Bauteile 56 einer elektrischen Schaltung aufweist und wobei die Bauteile 56 mit dem Steckeranschluß 57 verbunden sind. Die Öffnung des Gehäuses 40 wird ferner von einem Deckel 58 abgeschlossen, der das Innere des Gehäuses 40 vor Feuchtigkeit und anderen äußeren schädlichen Einflüssen schützt. An der Unterseite der Leiterplatte 55 ist ein Hall-Element 20 angeordnet, das mit den Bauteilen 56 der Schaltung verbunden ist. Ferner ist das Hall-Element 20 von einer an der Unterseite der Leiterplatte 50 befestigten Abstützung 60 umgeben, in der das Ende des Hall-Elements 20 eingebettet ist. Dadurch kann es bei Schüttelbewegungen oder sonstigen mechanischen Einflüssen nicht herabfallen oder beschädigt werden. Wie bei den bisherigen Ausführungsbeispielen sind die sensitive(n) Fläche(n) 61 des Hall-Elements 20 nicht zentrisch über den Mittelpunkt der Welle angeordnet, so daß auch hier eine ovale oder elliptische Bahn des Permanentmagneten 52 um die sensitiven Flächen 61 des Hall-Elements 20 erfolgt. Für Anwendungen mit kleinen Winkelbereichen, das heißt etwa im Bereich von -15°< <15° können die sensitiven Flächen 61 auch mittig positioniert werden. Das entspricht einer Kreisbahn.

Eine unsymmetrische Anordnung ist aber auch in diesem Winkelbereich möglich. Ferner befindet sich das Hall-Element 20 während der Drehbewegung immer im Magnetfeld des Permanentmagneten 52. Hierzu umkreist auch bei diesem Ausführungsbeispiel der Permanentmagnet das Hall-Element, so daß das Hall-Element sich ständig im sich bei der Drehbewegung verändernden Magnetfeld befindet. Bei wie hier radial und axialempfindlichen Sensorprinzipien beziehungsweise bei Sensoren mit besonderer Genauigkeit ist aufgrund der besonders vorteilhaften Lagerung eine preiswerte Herstellung möglich. Die Linearität und die Meßgenauigkeit ist besser als zum Beispiel bei Gleitlagern. Das sonst aufgrund unterschiedlicher Fertigungstoleranzen und aufgrund unterschiedlicher Ausdehnungen bei Temperaturschwankungen auftretende Radialspiel ist bei dieser Lagerung nicht mehr vorhanden.

## Patentansprüche

1. Meßvorrichtung (10) zur berührungslosen Erfassung eines Drehwinkels mit einem Rotor (11, 12), auf dem ein Magnet (15) angeordnet ist und einem magnetfeldempfindlichen Element (20) zur Erzeugung eines Meßsignals, **dadurch gekennzeichnet, daß** der Rotor (11, 12) aus magnetisch nicht leitendem Material besteht, daß der Magnet (15) planar ausgebildet ist und parallel zu einer durch die Achse (11) des Rotors (12) gehenden Ebene (16) angeordnet ist, daß die Polarisierung des Magneten (15) diametral zur Achse (11) ist, daß die Meßvorrichtung (10) keine Flußleitteile aufweist und daß das magnetfeldempfindliche Element (20) und der Magnet (15) so angeordnet sind, daß während der Drehbewegung das Element (20) sich im Magnetfeld des Magneten (15) befindet.

2. Meßvorrichtung nach Anspruch 1, **dadurch gekennzeichnet, daß** das magnetfeldempfindliche Element (20) und der Magnet (15) so zueinander angeordnet sind, daß sie eine ovale Bewegung zueinander beschreiben.

3. Meßvorrichtung nach Anspruch 2, **dadurch gekennzeichnet, daß** das magnetfeldempfindliche Element (20) und der Magnet (15) so zueinander angeordnet sind, daß sie eine elliptische Kreisbewegung zueinander beschreiben.

4. Meßvorrichtung nach einem der Ansprüche 1 bis 3, **dadurch gekennzeichnet, daß** der Magnet (15) eine rechteckige Form mit abgerundeten Ecken aufweist.

5. Meßvorrichtung nach einem der Ansprüche 1 bis 3, **dadurch gekennzeichnet, daß** der Magnet (15) eine ovale Form oder runde Form aufweist.

6. Meßvorrichtung nach einem der Ansprüche 1 bis 5, **dadurch gekennzeichnet, daß** das magnetfeldempfindliche Element (20) außermittig zur Achse (11) angeordnet ist.

7. Meßeinrichtung nach einem der Ansprüche 1 bis 5, **dadurch gekennzeichnet, daß** das magnetfeldempfindliche Element (20) außermittig in der Ebene (16) angeordnet ist.

8. Meßeinrichtung nach einem der Ansprüche 1 bis 5, **dadurch gekennzeichnet, daß** das magnetfeldempfindliche Element (20) sich im Bereich eines Quadranten des Rotors (12) befindet.

9. Meßeinrichtung nach einem der Ansprüche 1 bis 8, **dadurch gekennzeichnet, daß** der Rotor (12) eine Kreisform aufweist.

10. Meßeinrichtung nach einem der Ansprüche 1 bis 9, **dadurch gekennzeichnet, daß** das magnetfeldempfindliche Element (20) ein Hall-Element ist, das mehrere Meßflächen zur Bildung eines Mittelwerts aufweist.

11. Meßvorrichtung nach einem der Ansprüche 1 bis 10, **dadurch gekennzeichnet, daß** am Rotor (12) eine Welle (11a) angeordnet ist, die mit Hilfe einer Kegellagerung in einer Öffnung (42) eines Gehäuses (40) gelagert ist.

12. Meßvorrichtung nach Anspruch 11, **dadurch gekennzeichnet, daß** ein Fortsatz (43) der Welle (11a) kegelförmig ausgebildet ist, und daß der Fortsatz (43) in der konisch ausgebildeten Öffnung (42) des Gehäuses (40) gelagert ist.

## Claims

1. Measurement apparatus (10) for non-contacting detection of rotation angles having a rotor (11, 12) on which a magnet (15) is arranged and having an element (20) which is sensitive to magnetic fields for production of a measurement signal, **characterized in that** the rotor (11, 12) is composed of magnetically impermeable material, **in that** the magnet (15) is designed to be planar and is arranged parallel to a plane (16) which passes through the axis (11) of the rotor (12), **in that** the magnet (15) is polarized diametrically with respect to the axis (11), **in that** the measurement apparatus (10) has no flux conducting parts and **in that** the element (20) which is sensitive to magnetic fields and the magnet (15) are arranged such that, during the rotary movement, the element (20) is located in the magnetic field of the magnet (15).

2. Measurement apparatus according to Claim 1, **characterized in that** the element (20) which is sensitive to magnetic fields and the magnet (15) are arranged with respect to one another such that they describe an oval movement with respect to one another.

3. Measurement apparatus according to Claim 2, **characterized in that** the element (20) which is sensitive to magnetic fields and the magnet (15) are arranged with respect to one another such that they describe an elliptical circular movement with respect to one another.

4. Measurement apparatus according to one of Claims 1 to 3, **characterized in that** the magnet (15) has a rectangular shape with rounded corners.

5. Measurement apparatus according to one of Claims 1 to 3, **characterized in that** the magnet (15) has an oval shape or a round shape.

6. Measurement apparatus according to one of Claims 1 to 5, **characterized in that** the element (20) which is sensitive to magnetic fields is arranged eccentrically with respect to the axis (11).

7. Measurement device according to one of Claims 1 to 5, **characterized in that** the element (20) which is sensitive to magnetic fields is arranged eccentrically on the plane (16).

8. Measurement device according to one of Claims 1 to 5, **characterized in that** the element (20) which is sensitive to magnetic fields is located in the area of one quadrant of the rotor (12).

9. Measurement device according to one of Claims 1 to 8, **characterized in that** the rotor (12) has a circular shape.

10. Measurement device according to one of Claims 1 to 9, **characterized in that** the element (20) which is sensitive to magnetic fields is a Hall element which has a number of measurement surfaces in order to form a mean value.

11. Measurement apparatus according to one of Claims 1 to 10, **characterized in that** a shaft (11a) is arranged on the rotor (12) and is mounted in an opening (42) in a housing (40) by means of a ball bearing.

12. Measurement apparatus according to Claim 11, **characterized in that** a projection (43) on the shaft (11a) is conical, and **in that** the projection (43) is mounted in the conical opening (42) in the housing (40).

## Revendications

1. Dispositif de mesure (10) pour détecter sans contact un angle de rotation, composé d'un rotor (11, 12) sur lequel est placé un aimant (15) et d'un élément (20) sensible au champ magnétique et destiné à produire un signal de mesure,
**caractérisé en ce que**
le rotor (11, 12) est en un matériau magnétiquement non conducteur,
l'aimant (15) a une forme plane et est placé parallèlement à un plan (16) qui passe par l'axe (11) du rotor (12), la polarisation de l'aimant (15) est diamétrale à l'axe (11),
le dispositif de mesure (10) ne présente pas de pièces qui conduisent le flux, et l'élément (20) sensible au champ magnétique ainsi que l'aimant (15) sont disposés de telle manière que pendant la rotation l'élément (20) se trouve dans le champ magnétique de l'aimant (15).

2. Dispositif de mesure selon la revendication 1,
**caractérisé en ce que**
l'élément (20) sensible au champ magnétique et l'aimant (15) sont disposés l'un par rapport à l'autre de telle manière qu'ils décrivent l'un par rapport à l'autre un mouvement ovale.

3. Dispositif de mesure selon la revendication 2,
**caractérisé en ce que**
l'élément (20) sensible au champ magnétique et l'aimant (15) sont disposés l'un par rapport à l'autre de telle manière qu'ils décrivent l'un par rapport à l'autre un mouvement circulaire elliptique.

4. Dispositif de mesure selon l'une des revendications 1 à 3,
**caractérisé en ce que**
l'aimant (15) est rectangulaire et ses angles arrondis.

5. Dispositif de mesure selon l'une des revendications 1 à 3,
**caractérisé en ce que**
l'aimant (15) est ovale ou rond.

6. Dispositif de mesure selon l'une des revendications 1 à 5,
**caractérisé en ce que**
l'élément (20) sensible au champ magnétique est excentré par rapport à l'axe (11).

7. Dispositif de mesure selon l'une des revendications 1 à 5,
**caractérisé en ce que**
l'élément (20) sensible au champ magnétique est disposé de façon excentrée dans le plan (16).

8. Dispositif de mesure selon l'une des revendications 1 à 5,
**caractérisé en ce que**
l'élément (20) sensible au champ magnétique se trouve dans la zone d'un quadrant du rotor (12).

9. Dispositif de mesure selon l'une des revendications 1 à 8,
**caractérisé en ce que**
le rotor (12) est circulaire.

10. Dispositif de mesure selon l'une des revendications 1 à 9,
**caractérisé en ce que**
l'élément (20) sensible au champ magnétique est un élément de Hall qui a plusieurs surfaces de mesure pour former une moyenne.

11. Dispositif de mesure selon l'une des revendications 1 à 10,
**caractérisé en ce que**
sur le rotor (12) un arbre (11a) est monté à l'aide d'un palier conique dans une ouverture (42) d'un boîtier (40).

12. Dispositif de mesure selon la revendication 11,
**caractérisé en ce qu'**
un prolongement (43) de l'arbre (11a) est conique et le prolongement (43) est monté dans l'ouverture (42) conique du boîtier (40).
